# EUROPÄISCHE PATENTSCHRIFT

(11) **EP 3 155 035 B1**
(45) Veröffentlichungstag und Bekanntmachung des Hinweises auf die Patenterteilung: **29.11.2023**
(21) Anmeldenummer: 15729395.2
(22) Anmeldetag: 09.06.2015
(51) Int. Cl.: C08G 18/79, C08G 18/22, C09D 175/04, C08G 18/28, C08G 18/78, C08G 18/80

(54) **SILANGRUPPEN ENTHALTENDE THIOALLOPHANATPOLYISOCYANATE**
THIOALLOPHANATE POLYISOCYANATES CONTAINING SILANE GROUPS
POLYISOCYANATE DE THIOALLOPHANATE CONTENANT DES GROUPES DE SILANE

(30) Priorität: 13.06.2014 EP 14172295
(43) Veröffentlichungstag der Anmeldung: 19.04.2017
(73) Patentinhaber: Covestro Intellectual Property GmbH & Co. KG, 51373 Leverkusen (DE)
(72) Erfinder: LAAS, Hans-Josef, 51519 Odenthal (DE); EGGERT, Christoph, 50733 Köln (DE); MAGER, Dieter, 51373 Leverkusen (DE)
(74) Vertreter: Levpat
(86) Internationale Anmeldenummer: PCT/EP2015/062758
(87) Internationale Veröffentlichungsnummer: WO 2015/189164

(56) Entgegenhaltungen:
- EP-A1- 2 450 386
- EP-A2- 2 014 692
- WO-A1-2009/156148
- WO-A1-2014/037265
- US-A- 5 081 200
- LAPPRAND A ET AL: "Reactivity of isocyanates with urethanes: Conditions for allophanate formation", POLYMER DEGRADATION AND STABILITY, BARKING, GB, Bd. 90, Nr. 2, 1. November 2005 (2005-11-01), Seiten 363-373, XP027766605, ISSN: 0141-3910 [gefunden am 2005-11-01]

## Beschreibung

Die Erfindung betrifft Silangruppen enthaltende Thioallophanate, ein Verfahren zur ihrer Herstellung und ihre Verwendung als Ausgangskomponente bei der Herstellung von PolyurethanKunststoffen, insbesondere als Vernetzerkomponente in Polyurethanlacken und -beschichtungen.

Alkoxysilangruppen enthaltende Polyisocyanatgemische sind seit längerer Zeit bekannt. Derartige Produkte, die neben der Isocyanatgruppe eine zweite reaktive, d. h. zur Vernetzung fähige Struktur enthalten, wurden in der Vergangenheit in unterschiedlichen Polyurethansystemen und -anwendungen zur Erzielung spezieller Eigenschaften, beispielsweise zur Verbesserung der Haftung, Chemikalien- oder Kratzbeständigkeit von Beschichtungen, eingesetzt.

Beispielsweise beschreibt die WO 03/054049 isocyanatfunktionelle Silane, hergestellt aus monomerenarmen aliphatischen oder cycloaliphatischen Polyisocyanaten und sekundären Aminopropyltrimethoxysilanen, als Haftvermittler für Polyurethan-Schmelzklebstoffe.

Auch nach der Lehre der JP-A 2005015644 lässt sich durch Einsatz von mit N-substituierten, d. h. sekundären Aminopropylalkoxysilanen modifizierten Polyisocyanaten oder Isocyanatprepolymeren die Haftung von Kleb- und Dichtstoffen verbessern.

Die EP-B 0 994 139 beansprucht Umsetzungsprodukte von aliphatischen bzw. cycloaliphatischen Polyisocyanaten mit unterschüssigen Mengen alkoxysilanfunktioneller Asparaginsäureester, wie sie in der EP 0 596 360 als Reaktionspartner für isocyanatfunktionelle Verbindungen beschrieben werden, und gegebenenfalls Polyethylenoxidpolyetheralkoholen als Bindemittel für einkomponentige feuchtigkeitsvernetzende Beschichtungen, Kleb- oder Dichtstoffe mit beschleunigter Aushärtung.

Umsetzungsprodukte aliphatischer bzw. cycloaliphatischer Polyisocyanate mit unterschüssigen Mengen alkoxysilanfunktioneller Asparaginsäureester oder sekundärer Aminoalkylsilane werden auch in der WO 02/058569 als Vernetzerkomponenten für Zweikomponenten-Polyurethan-Haftprimer beschrieben.

Die EP-B 0 872 499 beschreibt wässrige zweikomponentige Polyurethanlacke, die als Vernetzerkomponente Isocyanat- und Alkoxysilylgruppen aufweisende Verbindungen enthalten. Der Einsatz dieser speziellen Polyisocyanate führt zu Beschichtungen mit verbesserter Wasserfestigkeit bei gleichzeitig hohem Glanz.

Hydrophil modifizierte und daher leichter emulgierbare, Alkoxysilangruppen enthaltende Polyisocyanate wurden ebenfalls bereits als Vernetzerkomponenten für wässrige 2K-Lack- und Klebstoffdispersionen genannt (z. B. EP-A 0 949 284).

Zur Verbesserung der Kratzbeständigkeit von lösemittelhaltigen wärmehärtenden 2K-PUR-Automobil-Klar- bzw. Decklacken wurden in jüngster Zeit Umsetzungsprodukte von aliphatischen und/oder cycloaliphatischen Polyisocyanaten mit N,N-Bis-(trialkoxysilylpropyl)-aminen als Vernetzerkomponente vorgeschlagen (EP-A 1 273 640).

US5081200 offenbart eine Beschichtung enthaltend ein Reaktionsprodukt aus Diisocyanat und ein Mercaptosilan. EP2450386 offenbart Beschichtungen enthaltend silanterminierte Harze. WO2014037265 offenbart silanfunktionelle Bondemittel mit Thiourethanstruktur.

WO 2009/156148 beschreibt Reaktionsprodukte isocyanatfunktioneller Verbindungen mit stöchiometrisch unterschüssigen Mengen an Mercaptosilanen als Vernetzungsmittel für Automobilklarlacke bei der OEM-Serienlackierung oder in der Autoreparaturlackierung.

All diesen Silangruppen enthaltenden Polyisocyanatgemischen gemeinsam ist, dass sie durch anteilige Umsetzung von unmodifizierten Polyisocyanaten oder Polyisocyanatprepolymeren mit gegenüber Isocyanatgruppen reaktive Gruppen enthaltenden organofunktionellen Silanen, beispielsweise mercaptofunktionellen Silanen, primären Aminoalkylsilanen, sekundären N-alkylsubstituierten Aminoalkylsilanen oder alkoxysilanfunktionellen Asparaginsäureestern hergestellt werden.

Eine solche Modifizierung führt jedoch zwangsläufig zu einer Erniedrigung der mittleren Isocyanatfunktionalität bezogen auf die der eingesetzten Ausgangspolyisocyanate, was sich umso stärker auswirkt, je höher der angestrebte Silan-Gehalt im Reaktionsprodukt ist. In der Praxis sind in den obengenannten Anwendungen, wie z. B. Lacken oder Klebstoffen, zur Erzielung einer hohen Netzwerkdichte aber gerade Polyisocyanatvernetzer mit möglichst hoher Isocyanatfunktionalität erwünscht.

Darüberhinaus nimmt mit steigendem Modifizierungsgrad, d. h. Silangruppen-Gehalt, auch die Viskosität der Produkte aufgrund der ins Molekül eingebrachten Thiourethan- und insbesondere Harnstoffgruppen drastisch zu, weshalb sich die bisher bekannten Silangruppen enthaltenden Polyisocy anate in der Regel nur unter Verwendung erheblicher Mengen organischer Lösemittel in gelöster Form einsetzen lassen.

Eine Ausnahme diesbezüglich stellen die in der EP-A 2 014 692 und EP-A 2 305 691 beschriebenen, durch Umsetzung von Silangruppen enthaltenden Hydroxyurethanen bzw. Hydroxyamiden mit überschüssigen Mengen monomerer Diisocyanate erhältlichen Allophanat- und Silangruppen enthaltenden Polyisocyanate dar, die trotz hoher Isocyanatfunktionalitäten und hoher Silangehalte vergleichsweise niedrige Viskositäten aufweisen. Die Herstellung dieser speziellen silanfunktionellen Polyisocyanate ist allerdings aufgrund der geringen Stabilität der aus Aminoalkylsilanen mit cyclischen Carbonaten bzw. Lactonen gebildeten Hydroxyurethan- bzw. Hydroxyamid-Zwischenstufen sehr aufwendig und schlecht reproduzierbar.

Aufgabe der vorliegenden Erfindung war es daher, neue Silangruppen enthaltende Polyisocyanate zur Verfügung zu stellen, die nicht mit den Nachteilen des Standes der Technik behaftet sind.

Diese neuen Polyisocyanate in einem einfachen Verfahren sicher und reproduzierbar herstellbar sein und insbesondere auch bei hohen Silangruppengehalten niedrige Viskositäten aufweisen.

Diese Aufgabe konnte mit der Bereitstellung der nachfolgend näher beschriebenen erfindungsgemäßen Polyisocyanate mit Thioallophanatstruktur bzw. des Verfahrens zu ihrer Herstellung gelöst werden.

Die vorliegende Erfindung basiert auf der überraschenden Beobachtung, dass sich Mercaptosilane mit überschüssigen Mengen monomerer Diisocyanate leicht zu lagerstabilen, farbhellen Thioallophanatpolyisocyanaten umsetzen lassen, die sich selbst bei hohen Umsatzgraden und hohen Silangehalten durch äußerst niedrige Viskositäten auszeichnen.

Gegenstand der vorliegenden Erfindung sind Silangruppen enthaltende Thioallophanate der allgemeinen Formel (I) 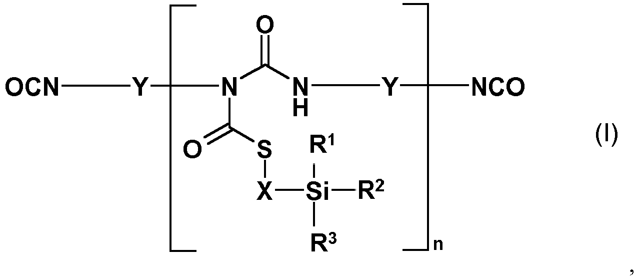 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht,
- Y: einen linearen oder verzweigten, aliphatischen oder cycloaliphatischen, einen araliphatischen oder aromatischen Rest mit bis zu 18 Kohlenstoffatomen bedeutet und
- n: für eine ganze Zahl von 1 bis 20 steht.

Gegenstand der Erfindung ist auch ein Verfahren zur Herstellung solcher Silangruppen enthaltender Thioallophanate, durch Umsetzung
A) mindestens eines monomeren Diisocyanates der allgemeinen Formel (II)

   **OCN-Y-NCO** (II),

   in welcher Y einen linearen oder verzweigten, aliphatischen oder cycloaliphatischen, einen araliphatischen oder aromatischen Rest mit bis zu 18 Kohlenstoffatomen bedeutet, mit
B) Mercaptosilanen der allgemeinen Formel (III) 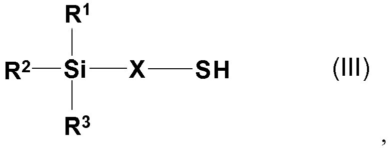 in welcher
   R¹, R², R³ und X die oben genannte Bedeutung haben,
in einem Äquivalentverhältnis von Isocyanatgruppen zu Mercaptogruppen von 2 : 1 bis 40 : 1.

Gegenstand ist schließlich auch die Verwendung der Silangruppen enthaltenden Thioallophanate als Ausgangskomponenten bei der Herstellung von Polyurethankunststoffen, insbesondere als Vernetzerkomponenten oder Bestandteil von Vernetzerkomponenten für Polyole und/oder Polyamine in Zweikomponenten Polyurethan- und/oder Polyharnstofflacken und -beschichtungen.

Als Ausgangsverbindungen A) für das erfindungsgemäße Verfahren sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können.

Geeignete Diisocyanate sind beispielsweise solche der allgemeinen Formel (II)

**OCN-Y-NCO** (II),

in welcher Y für einen linearen oder verzweigten, aliphatischen oder cycloaliphatischen Rest mit bis zu 18 Kohlenstoffatomen, bevorzugt 4 bis 18 Kohlenstoffatomen oder einen gegebenenfalls substituierten aromatischen oder araliphatischen Rest mit bis zu 18 Kohlenstoffatomen, bevorzugt 6 bis 18 Kohlenstoffatomen steht, wie z. B. 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethylcyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H₁₂-MDI), 1,3- und 1,4-Bis(isocyanatomethyl)cyclohexan, 4,4'-Diisocyanato-3,3'-dimethyldicyclohexylmethan, 4,4' Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75 - 136.

Als Ausgangskomponente A) besonders bevorzugt sind Diisocyanate der allgemeinen Formel (II), in welcher Y für einen linearen oder verzweigten, aliphatischen oder cycloaliphatischen Rest mit 5 bis 13 Kohlenstoffatomen steht.

Ganz besonders bevorzugte Ausgangskomponenten A) für das erfindungsgemäße Verfahren sind 1,5-Diisocyanaotpentan, 1,6-Diisocyanatohexan, 1 -Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Ausgangskomponenten B) für das erfindungsgemäße Verfahren sind beliebige Mercaptosilanen der allgemeinen Formel (III) 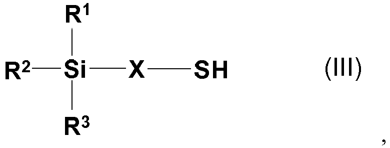 in welcher
- R¹, R² und R³: für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann, und
- X: für einen linearen oder verzweigten organischen Rest mit mindestens 2 Kohlenstoffatomen steht.

Geeignete Mercaptosilane B) sind beispielsweise 2-Mercaptoethyltrimethylsilan, 2-Mercaptoethylmethyldimethoxysilan, 2-Mercaptoethyltrimethoxysilan, 2-Mercaptoethyltriethoxysilan, 3-Mercaptopropylmethyldimethoxysilan, 3-Mercaptopropyldimethylmethoxysilan, 3-Mercaptopropyltrimethoxysilan, 3-Mercaptopropylmethyldiethoxysilan, 3-Mercaptopropyltriethoxysilan, 3-Mercaptopropylethyldimethoxysilan, 3-Mercaptopropylethyldiethoxysilan und/oder 4-Mercaptobutyltrimethoxysilan.

Bevorzugte Mercaptosilane B) für das erfindungsgemäße Verfahren sind solche der allgemeinen Formel (III), in welcher
- R¹, R² und R³: für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
- X: für einen linearen oder verzweigten Alkylenrest mit 2 bis 10 Kohlenstoffatomen steht.

Besonders bevorzugte Mercaptosilane B) sind solche der allgemeinen Formel (III), in welcher
- R¹, R² und R³: jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
- X: für einen Propylenrest (-CH₂-CH₂-CH₂-) steht.

Ganz besonders bevorzugte Mercaptosilane B) sind solche der allgemeinen Formel (III), in welcher
- R¹, R² und R³: für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht, und
- X: für einen Propylenrest (-CH₂-CH₂-CH₂-) steht.

Zur Durchführung des erfindungsgemäßen Verfahrens werden die Diisocyanate A) mit den Mercaptosilanen B) bei Temperaturen von 20 bis 200 °C, vorzugsweise 40 bis 160 °C, unter Einhaltung eines Äquivalentverhältnis von Isocyanatgruppen zu Mercaptogruppen von 2 : 1 bis 40 : 1, vorzugsweise von 4 : 1 bis 30 : 1, besonders bevorzugt 6 : 1 bis 20 : 1, zu Thioallophanaten umgesetzt.

Das erfindungsgemäße Verfahren kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren für das erfindungsgemäße Verfahren sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen beim erfindungsgemäßen Verfahren, falls überhaupt, in einer Menge von 0,001 bis 5 Gew.-%, vorzugsweise 0,005 bis 1 Gew.-%, bezogen auf das Gesamtgewicht der Reaktionspartner A) und B) zum Einsatz und können sowohl vor Reaktionsbeginn als auch zu jedem Zeitpunkt der Reaktion zugesetzt werden.

Das erfindungsgemäße Verfahren wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder - ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®} (Deutsche EXXON CHEMICAL GmbH, Köln, DE) und Shellsol^{®} (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und-butyletheracetat, N-Methylpyrrolidon und N-Methylcaprolactam, oder beliebige Gemische solcher Lösemittel.

In einer möglichen Ausführungsform wird beim erfindungsgemäßen Verfahren das Ausgangsdiisocyanat A) bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend wird das Mercaptosilan B) bzw. eine Mischung verschiedener Mercaptosilane in der oben angegebenen Menge zugegeben und die Reaktionstemperatur für die Thiourethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Thiourethanisierungsreaktion, d. h. wenn der einem vollständigen Umsatz von Isocyanat- und Mercaptogruppen theoretisch entsprechende NCO-Gehalt erreicht ist, kann die Thioallophanatisierung beispielsweise ohne Zusatz eines Katalysators durch Erhitzen des Reaktionsgemisches auf eine Temperatur von 120 bis 200°C gestartet werden. Vorzugsweise kommen zur Beschleunigung der Thioallophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 70 bis 120°C, zur Durchführung der Reaktion ausreichend sind.

In einer anderen möglichen Ausführungsform des erfindungsgemäßen Verfahrens wird der gegebenenfalls mitzuverwendende Katalysator entweder der Diisocyanatkomponente A) und/oder der Silankomponente B) bereits vor Beginn der eigentlichen Umsetzung zugemischt. In diesem Fall reagieren die sich intermediär bildenden Thiourethangruppen spontan weiter zur gewünschten Thioallophanatstruktur. Bei dieser Art der einstufigen Reaktionsführung werden die gegebenenfalls den Katalysator enthaltenden Ausgangsdiisocyanate A) gegebenenfalls unter Inertgas, wie beispielsweise Stickstoff, und gegebenenfalls in Gegenwart eines geeigneten Lösungsmittels der genannten Art, in der Regel bei für die Thioallophanatisierung optimalen Temperaturen im Bereich von 60 bis 140°C, vorzugsweise 70 bis 120°C, vorgelegt und mit der gegebenenfalls den Katalysator enthaltenden Silankomponente B) zur Reaktion gebracht.

Es ist aber auch möglich, den Katalysator dem Reaktionsgemisch zu einem beliebigen Zeitpunkt während der Thiourethanisierungsreaktion zuzusetzen. Bei dieser Ausführungsform des erfindungsgemäßen Verfahrens wird für die vor der Katalysatorzugabe ablaufende reine Thiourethanisierungsreaktion in der Regel eine Temperatur im Bereich von 30 bis 120°C, vorzugsweise von 50 bis 100°C, eingestellt. Nach Zugabe eines geeigneten Katalysators wird die Thioallophantisierungreaktion schließlich bei Temperaturen von 60 bis 140°C, vorzugsweise von 70 bis 120°C, durchgeführt.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, wenn der Thioallophanatisierungsgrad (d. h. der aus dem NCO-Gehalt errechenbare prozentuale Anteil der zu Thioallophanatgruppen umgesetzten, aus den Mercaptogruppen der Komponente B) sich intermediär bildenden Thiourethangruppen) des Reaktionsgemisches mindestens 70 %, besonders bevorzugt mindestens 90 % beträgt, ganz besonders bevorzugt nach vollständiger Thioallophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Thioallophanatisierungskatalysators der genannten Art wird die Umsetzung im allgemeinen aber durch Zugabe geeigneter Katalysatorgifte, beispielsweise Säurechloride wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt. Unabhängig von der Art der Aufarbeitung erhält man als Produkte des erfindungsgemäßen Verfahrens klare, praktisch farblose Thioallophanatpolyisocyanate, die in der Regel Farbzahlen von unter 120 APHA, vorzugsweise von unter 80 APHA, besonders bevorzugt von unter 60 APHA, und einen NCO-Gehalt von 2,0 bis 18,0 Gew.-%, vorzugsweise 7,0 bis 17,0 Gew.-%, besonders bevorzugt 10,0 bis 16,0 Gew.-%, aufweisen. Dabei beträgt die mittlere NCO-Funktionalität in Abhängigkeit vom Umsatzgrad und verwendetem Thioallophanatisierungskatalysator in der Regel von 1,8 bis 3,0, vorzugsweise von 1,8 bis 2,5, besonders bevorzugt von 1,9 bis 2,0,

Die erfindungsgemäßen Thioallophanatpolyisocyanate stellen wertvolle Ausgangsmaterialien zur Herstellung von Polyurethan- und/oder Polyhamstoff-Kunststoffen nach dem Isocyanat-Polyadditionsverfahren dar.

Sie können aufgrund ihrer niedrigen Viskosität lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die erfindungsgemäßen Silangruppen enthaltenden Thioallophanatpolyisocyanate eignen sich in hervorragender Weise als Vernetzerkomponenten oder Bestandteil von Vernetzerkomponenten für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanate vorliegen. Besonders bevorzugte Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Im allgemeinen besitzen die mit den erfindungsgemäßen Silangruppen enthaltenden Thioallophanatpolyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat. Daneben können auch Katalysatoren mitverwendet werden, die die Hydrolyse und Kondensation von Alkoxysilangruppen oder deren Reaktion mit den Hydroxylgruppen der als Bindemittel eingesetzten Polyolkomponenten beschleunigen. Derartige Katalysatoren sind neben vorstehend genannten Isocyanatkatalysatoren beispielsweise auch Säuren, wie z. B. p-Toluolsulfonsäure, Trifluormethansulfonsäure, Essigsäure, Trifluoressigsäure und Dibutylphosphat, Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze oder metallorganische Verbindungen, wie z. B. Tetraisopropyltitanat, Tetrabutyltitanat, Titan(IV)acetylacetonat, Aluminiumacetylacetonat, Aluminiumtriflat oder Zinntriflat.

Selbstverständlich können die erfindungsgemäßen Silangruppen enthaltenden Thioallophanatpolyisocyanate auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Die erfindungsgemäßen Verfahrensprodukte können auch mit Polyaminen, wie z. B. den aus EP-B 0 403 921 bekannten Polyasparaginsäurederivaten, oder auch solchen Polyaminen, deren Aminogruppen in blockierter Form vorliegen, wie z. B. Polyketiminen, Polyaldiminen oder Oxazolanen, kombiniert werden. Aus diesen blockierten Aminogruppen entstehen unter Feuchtigkeitseinfluss freie Aminogruppen und im Falle der Oxazolane auch freie Hydroxylgruppen, die unter Vernetzung mit der Isocyanatgruppen der Silangruppen enthaltenden Thioallophanatpolyisocyanate abreagieren.

Die erfindungsgemäßen Silangruppen enthaltenden Thioallophanatpolyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gegebenenfalls können den mit den erfindungsgemäßen Silangruppen enthaltenden Thioallophanatpolyisocyanaten formulierten Beschichtungssystemen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)trimethoxy-silan, Phenyltrimethoxysilan oder Phenyltriethoxysilan, oder Gemische solcher Silanverbindungen als Reaktionspartner zugesetzt werden.

In allen vorstehend beschriebenen Verwendungen der erfindungsgemäßen Thioallophanatpolyisocyanate können diese sowohl alleine als auch in Abmischung mit beliebigen weiteren Polyisocyanaten mit aliphatisch, cycloaliphatisch, araliphatisch und/oder aromatisch gebundenen Isocyanatgruppen, insbesondere den bekannten Lackpolyisocyanaten mit Uretdion-, Isocyanurat-, Iminooxadiazindion-, Urethan-, Allophanat-, Biuret- und/oder Oxadiazintrionstruktur, wie sie beispielhaft in Laas et al., J. Prakt. Chem. 336, 1994, 185-200*,* der DE-A 1 670 666, DE-A 3 700 209, DE-A 3 900 053, EP-A 0 330 966, EP-A 0 336 205, EP-A 0 339 396 und EP-A 0 798 299 beschrieben sind, als Isocyanatkomponente zum Einsatz kommen. Insbesondere solche Abmischungen, in denen die erfindungsgemäßen Thioallophanate aufgrund ihrer sehr niedrigen Viskosität die Rolle eines Reaktivverdünners für in der Regel höherviskose Lackpolyisocyanate übernehmen, zeigen gegenüber den bisher bekannten silanfunktionellen Polyisocynanaten des Standes der Technik bei vergleichbaren Silangehalten den Vorteil erheblich höherer Isocyanatgehalte und -funktionalitäten bei gleichzeitig deutlich niedrigeren Viskositäten.

Gegenstand der Erfindung ist daher auch die Verwendung der erfindungsgemäßen Silangruppen enthaltenden Thioallophanatpolyisocyanate zur Abmischung mit Polyisocyanaten mit aliphatisch, cycloaliphatisch, araliphatisch und/oder aromatisch gebundenen Isocyanatgruppen, die Uretdion-, Isocyanurat-, Iminooxadiazindion-, Urethan-, Allophanat-, Biuret- und/oder Oxadiazintrionstruktur aufweisen, sowie die daraus resultierenden Silangruppen enthaltenden Polyisocyanatgemische selbst.

In Zweikomponenten Polyurethan- und/oder Polyharnstofflacken und -beschichtungen, die als Vernetzerkomponenten oder Bestandteil von Vernetzerkomponenten für Polyole und/oder Polyamine die erfindungsgemäßen Thioallophanatpolyisocyanate enthalten, liegen die Reaktionspartner üblicherweise in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Gegebenenfalls können die erfindungsgemäßen Polyisocyanatgemische in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Silangruppen enthaltenden Thioallophanatpolyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Weitere Gegenstände dieser Erfindung sind somit Beschichtungsmittel enthaltend die erfindungsgemäßen Silangruppen enthaltenden Thioallophanatpolyisocyanate, sowie die mit diesen Beschichtungsmitteln beschichteten Substrate.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909.

Die Rest-Monomeren Gehalte wurden nach DIN EN ISO 10283 gaschromatographisch mit internem Standard gemessen.

Sämtliche Viskositätsmessungen erfolgten mit einem Physica MCR 51 Rheometer der Fa. Anton Paar Germany GmbH (DE) nach DIN EN ISO 3219.

Die Hazen-Farbzahlen wurden an einem LICO 400 Farbmessgerät der Fa. Hach Lange GmbH, Düsseldorf, ermittelt.

Die Gehalte (mol-%) der unter den erfindungsgemäßen Verfahrensbedingungen entstehenden Isocyanatfolgeprodukte Thiourethan, Thioallophanat und Isocyanurat wurden aus den Integralen protokonenentkoppelter ¹³C-NMR-Spektren (aufgenommen an einem Gerät Bruker DPX-400) errechnet und beziehen sich jeweils auf die Summe an vorliegenden Thiourethan-, Thioallophanat- und Isocyanuratgruppen. Die einzelnen Strukturelemente weisen folgende chemische Verschiebungen (in ppm) auf: Thiourethan: 166.8; Thioallophanat: 172.3 und 152.8; Isocyanurat: 148.4.

### Beispiel 1 (erfindungsgemäß)

1008 g (6 mol) Hexamethylendiisocyanat (HDI) wurden bei einer Temperatur von 80°C unter trockenem Stickstoff und Rühren vorgelegt und innerhalb von 30 min mit 196 g (1,0 mol) Mercaptopropyltrimethoxysilan versetzt. Das Reaktionsgemisch wurde weiter bei 80°C gerührt, bis nach ca. 6 Stunden der einer vollständigen Thiourethanisierung entsprechende NCO-Gehalt von 38,4 % erreicht war.

Zu diesem Zeitpunkt wurde dem Reaktionsgemisch eine Probe entnommen und die Zusammensetzung ¹³C-NMR-spektroskopisch bestimmt. Danach lagen ausschließlich Thiourethangruppen vor. Das ¹³C-NMR-Spektrum wies keine Signale von Thioallophanat- oder Isocyanuratgruppen auf.

Durch Zugabe von 0,1 g Zink-(II)-2-ethyl-1-hexanoat als Katalysator zum 80°C warmen Reaktionsgemisch wurde die Thioallophanatisierungsreaktion gestartet, wobei die Temperatur aufgrund der exotherm einsetzenden Reaktion bis auf 85°C anstieg. Es wurde weiter bei 85°C gerührt bis der NCO-Gehalt ca. 1 h nach Katalysatorzugabe auf 34,9 % abgesunken war. Die Reaktion wurde durch Zugabe von 0,1 g ortho-Phosphorsäure abgestoppt und das nicht umgesetzte monomere HDI bei einer Temperatur von 130°C und einem Druck von 0,1 mbar im Dünnschichtverdampfer abgetrennt. Man erhielt 538 g eines praktisch farblosen klaren Polyisocyanatgemisches, das folgende Kenndaten und Zusammensetzung aufwies:

| | |
|---|---|
| NCO-Gehalt: | 14,4 % |
| monomeres HDI: | 0,08 % |
| Viskosität (23°C): | 291 mPas |

| | |
|---|---|
| Thiourethan: | 0,0 mol-% |
| Thioallophanat: | 91,2 mol-% |
| Isocyanuratgruppen: | 8,8 mol-% |

### Beispiel 2 (erfindungsgemäß)

1008 g (6 mol) Hexamethylendiisocyanat (HDI) wurden bei einer Temperatur von 80°C unter trockenem Stickstoff und Rühren vorgelegt und mit 0,1 g Zink-(II)-2-ethyl-1-hexanoat als Katalysator versetzt. Über einen Zeitraum von ca. 30 min wurden 196 g (1,0 mol) Mercaptopropyltrimethoxysilan zugetropft, wobei die Temperatur der Mischung aufgrund der exotherm einsetzenden Reaktion bis auf 85°C anstieg. Das Reaktionsgemisch wurde weiter bei 85°C gerührt bis der NCO-Gehalt nach ca. 2 h auf 34,9 % abgesunken war. Der Katalysator wurde durch Zugabe von 0,1 g ortho-Phosphorsäure deaktiviert und das nicht umgesetzte monomere HDI bei einer Temperatur von 130°C und einem Druck von 0,1 mbar im Dünnschichtverdampfer abgetrennt. Man erhielt 523 g eines praktisch farblosen klaren Polyisocyanatgemisches, das folgende Kenndaten und Zusammensetzung aufwies:

| | |
|---|---|
| NCO-Gehalt: | 14,2 % |
| monomeres HDI: | 0,05 % |
| Viskosität (23°C): | 249 mPas |

| | |
|---|---|
| Thiourethan: | 0,0 mol-% |
| Thioallophanat: | 98,5 mol-% |
| Isocyanuratgruppen: | 1,5 mol-% |

### Beispiel 3 (erfindungsgemäß)

Nach dem in Beispiel 2 beschriebenen Verfahren wurden 1344 g (8 mol) HDI in Gegenwart von 0,15 g Zink-(II)-2-ethyl-1-hexanoat mit 196 g (1,0 mol) Mercaptopropyltrimethoxysilan bei einer Temperatur von 85°C bis zu einem NCO-Gehalt von 38,2 % umgesetzt. Nach Abstoppen der Reaktion mit 0,15 g ortho-Phosphorsäure und destillativer Aufarbeitung im Dünnschichtverdampfer erhielt man 528 g eines praktisch farblosen klaren Polyisocyanatgemisch, das folgende Kenndaten und Zusammensetzung aufwies:

| | |
|---|---|
| NCO-Gehalt: | 15,2 % |
| monomeres HDI: | 0,12 % |
| Viskosität (23°C): | 209 mPas |

| | |
|---|---|
| Thiourethan: | 0,0 mol-% |
| Thioallophanat: | 99,0 mol-% |
| Isocyanuratgruppen: | 1,0 mol-% |

### Beispiel 4 (erfindungsgemäß)

Nach dem in Beispiel 2 beschriebenen Verfahren wurden 672 g (4 mol) HDI in Gegenwart von 0,1 g Zink-(11)-2-ethyl-1-hexanoat mit 196 g (1,0 mol) Mercaptopropyltrimethoxysilan bei einer Temperatur von 85°C bis zu einem NCO-Gehalt von 29,0 % umgesetzt. Nach Abstoppen der Reaktion mit 0,1 g ortho-Phosphorsäure und destillativer Aufarbeitung im Dünnschichtverdampfer erhielt man 486 g eines praktisch farblosen klaren Polyisocyanatgemisch, das folgende Kenndaten und Zusammensetzung aufwies:

| | |
|---|---|
| NCO-Gehalt: | 12,9 % |
| monomeres HDI: | 0,06 % |
| Viskosität (23°C): | 298 mPas |

| | |
|---|---|
| Thiourethan: | 0,0 mol-% |
| Thioallophanat: | 98,3 mol-% |
| Isocyanuratgruppen: | 1,7 mol-% |

### Beispiel 5 (erfindungsgemäß)

Nach dem in Beispiel 2 beschriebenen Verfahren wurden 756 g (4,5 mol) HDI in Gegenwart von 0,1 g Zink-(II)-2-ethyl-1-hexanoat mit 294 g (1,5 mol) Mercaptopropyltrimethoxysilan bei einer Temperatur von 85°C bis zu einem NCO-Gehalt von 24,0 % umgesetzt. Nach Abstoppen der Reaktion mit 0,1 g ortho-Phosphorsäure und destillativer Aufarbeitung im Dünnschichtverdampfer erhielt man 693 g eines praktisch farblosen klaren Polyisocyanatgemisch, das folgende Kenndaten und Zusammensetzung aufwies:

| | |
|---|---|
| NCO-Gehalt: | 11,8 % |
| monomeres HDI: | 0,06 % |
| Viskosität (23°C): | 452 mPas |

| | |
|---|---|
| Thiourethan: | 0,0 mol-% |
| Thioallophanat: | 99,0 mol-% |
| Isocyanuratgruppen: | 1,0 mol-% |

### Beispiel 6 (erfindungsgemäß)

Nach dem in Beispiel 2 beschriebenen Verfahren wurden 756 g (4,5 mol) HDI in Gegenwart von 0,1 g Zink-(II)-2-ethyl-1-hexanoat mit 357 g (1,5 mol) Mercaptopropyltriethoxysilan bei einer Temperatur von 85°C bis zu einem NCO-Gehalt von 22,6 % umgesetzt. Nach Abstoppen der Reaktion mit 0,1 g ortho-Phosphorsäure und destillativer Aufarbeitung im Dünnschichtverdampfer erhielt man 715 g eines praktisch farblosen klaren Polyisocyanatgemisch, das folgende Kenndaten und Zusammensetzung aufwies:

| | |
|---|---|
| NCO-Gehalt: | 11,3 % |
| monomeres HDI: | 0,21 % |
| Viskosität (23°C): | 267 mPas |

| | |
|---|---|
| Thiourethan: | 0,0 mol-% |
| Thioallophanat: | 98,4 mol-% |
| Isocyanuratgruppen: | 1,6 mol-% |

### Beispiel 7 (erfindungsgemäß)

504 g (3,0 mol) HDI wurden bei einer Temperatur von 80°C unter trockenem Stickstoff und Rühren vorgelegt und innerhalb von 30 min mit 588 g (3,0 mol) Mercaptopropyltrimethoxysilan versetzt. Das Reaktionsgemisch wurde weiter bei 80°C gerührt, bis nach ca. 12 Stunden der einer vollständigen Thiourethanisierung entsprechende NCO-Gehalt von 11,5 % erreicht war. Es wurden 0,1 g Zink-(II)-2-ethyl-1-hexanoat als Katalysator zum 80°C warmen Reaktionsgemisch zugegeben, worauf die Temperatur aufgrund der exotherm einsetzenden Thioallophanatisierungsreaktion Reaktion bis auf 85°C anstieg. Das Gemisch wurde weiter bei 85°C gerührt bis der NCO-Gehalt ca. 4 h nach Katalysatorzugabe auf 3,0 % abgesunken war. Anschließend wurde die Reaktion wurde durch Zugabe von 0,1 g ortho-Phosphorsäure abgestoppt. Es lag ein praktisch farbloses klares Polyisocyanatgemisch vor, das folgende Kenndaten und Zusammensetzung aufwies:

| | |
|---|---|
| NCO-Gehalt: | 3,0 % |
| monomeres HDI: | 0,69 % |
| Viskosität (23°C): | 9.220 mPas |

| | |
|---|---|
| Thiourethan: | 23,2 mol-% |
| Thioallophanat: | 66,6 mol-% |
| Isocyanuratgruppen: | 10,2 mol-% |

### Beispiel 8 (erfindungsgemäß)

1332 g (6 mol) Isophorondiisocyanat (IPDI) wurden bei einer Temperatur von 95°C unter trockenem Stickstoff und Rühren vorgelegt und mit 0,2 g Zink-(II)-2-ethyl-1-hexanoat als Katalysator versetzt. Über einen Zeitraum von ca. 30 min wurden 196 g (1,0 mol) Mercaptopropyltrimethoxysilan zugetropft, wobei die Temperatur der Mischung aufgrund der exotherm einsetzenden Reaktion bis auf 103°C anstieg. Das Reaktionsgemisch wurde weiter bei 100°C gerührt bis der NCO-Gehalt nach ca. 5 h auf 27,4 % abgesunken war. Der Katalysator wurde durch Zugabe von 0,2 g ortho-Phosphorsäure deaktiviert und das nicht umgesetzte monomere IPDI bei einer Temperatur von 160°C und einem Druck von 0,1 mbar im Dünnschichtverdampfer abgetrennt. Man erhielt 659 g eines hellgelben klaren Polyisocyanatgemisches, das folgende Kenndaten und Zusammensetzung aufwies:

| | |
|---|---|
| NCO-Gehalt: | 11,6 % |
| monomeres IPDI: | 0,46 % |
| Viskosität (23°C): | 11.885 mPas |

| | |
|---|---|
| Thiourethan: | 1,3 mol-% |
| Thioallophanat: | 93,4 mol-% |
| Isocyanuratgruppen: | 4,3 mol-% |

### Beispiel 9 (erfindungsgemäß, thermische Thioallophanatisierung)

Zu 756 g (4,5 mol) HDI wurden bei einer Temperatur von 80°C unter trockenem Stickstoff und Rühren über einen Zeitraum von ca. 30 min 294 g (1,5 mol) Mercaptopropyltrimethoxysilan zugetropft. Das Reaktionsgemisch wurde anschließend auf 140°C erwärmt und weiter gerührt bis der NCO-Gehalt nach ca. 5 h auf 24,0 % abgesunken war. Nach destillativer Aufarbeitung im Dünnschichtverdampfer erhielt man 685 g eines praktisch farblosen klaren Polyisocyanatgemisches, das folgende Kenndaten und Zusammensetzung aufwies:

| | |
|---|---|
| NCO-Gehalt: | 11,8 % |
| monomeres HDI: | 0,08 % |
| Viskosität (23°C): | 447 mPas |

| | |
|---|---|
| Thiourethan: | 0,0 mol-% |
| Thioallophanat: | 98,6 mol-% |
| Isocyanuratgruppen: | 1,4 mol-% |

### Beispiele 10 - 13 (erfindungsgemäß) und 14 (Vergleich)

80 Gew.-Teile eines Polyisocyanuratpolyisocyanates A) auf Basis von HDI mit einem NCO-Gehalt von 21,6 %, einer mittleren Isocyanatfunktionalität von 3,5 und einer Viskosität (23°C) von 3200 mPas wurden mit 20 Gew.-Teilen des Thioallophanatpolyisocyanates aus Beispiel 5 versetzt und durch 30 minütiges Rühren bei 60°C zu einem erfindungsgemäßen silanfunktionellen Polyisocyanatgemisch 10 homogenisiert.

Nach dem gleichen Verfahren wurden unter Verwendung der in der unten stehenden Tabelle 1 aufgeführten Mengen der gleichen Ausgangskomponenten die erfindungsgemäßen silanfunktionellen Polyisocyanatgemische 11 bis 13 hergestellt.

Zum Vergleich wurde in Anlehnung an Beispiel 1 der WO 2009/156148 durch lösemittelfreie Umsetzung von 79 Gew.-Teilen des oben beschriebenen Polyisocyanuratpolyisocyanates A) auf Basis von HDI (NCO-Gehalt: 21,6 %; mittlere NCO-Funktionalität: 3,5; Viskosität (23°C): 3200 mPas) mit 21 Gew.-Teilen Mercaptopropyltrimethoxysilan in Gegenwart von 500 ppm Dibutylzinndilaurat als Katalysator ein teilsilanisiertes HDI-Trimerisat (Vergleichsbeispiel 14) hergestellt.

Die nachfolgende Tabelle 1 zeigt Zusammensetzungen (Gew.-Teile) und Kenndaten der erfindungsgemäßen silanfunktionellen Polyisocyanatgemische 10 bis 13 sowie die Kenndaten des Vergleichspolyisocyanates 14 nach WO 2009/156148.

**Tabelle 1:**

| **Beispiel** | **10** | **11** | **12** | **13** | **14 (Vergleich)** |
|---|---|---|---|---|---|
| HDI-Polyisocyanurat | 80 | 70 | 60 | 50 | - |
| Polyisocyanat aus Beispiel 5 | 20 | 30 | 40 | 50 | - |
| NCO-Gehalt [%] | 19,6 | 18,7 | 17,6 | 16,7 | 12,6 |
| Viskosität (23°C) [mPas] | 2240 | 1820 | 1490 | 1210 | 11800 |
| mittlere NCO-Funktionalität | 3,2 | 3,1 | 2,9 | 2,8 | 2,6 |

Der direkte Vergleich des erfindungsgemäßen silanfunktionellen Polyisocyanatgemisches 13 mit dem Vergleichspolyisocyanat 14 gemäß WO 2009/156148, die beide einen Gehalt an Silangruppen (berechnet als -Si(OCH₃)₃; Mol.-Gewicht = 121 g/mol) von 13 % aufweisen, belegt eindrucksvoll den deutlichen Vorteil der erfindungsgemäßen Verfahrensprodukte bezüglich Isocyanatgehalt, - funktionalität und Viskosität gegenüber dem bisherigen Stand der Technik.

## Patentansprüche

1. Silangruppen enthaltende Thioallophanate der allgemeinen Formel (I) 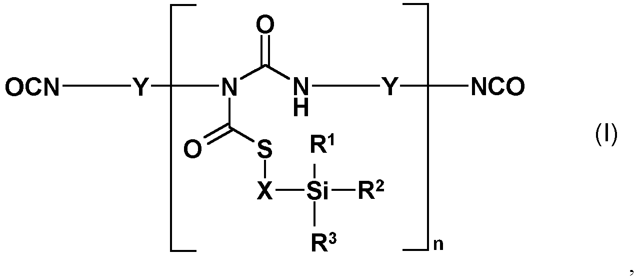 in welcher
R¹, R² und R³ für gleiche oder verschiedene Reste stehen und jeweils einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen bedeuten, der gegebenenfalls bis zu 3 Heteroatome aus der Reihe Sauerstoff, Schwefel, Stickstoff enthalten kann,
X für einen linearen oder verzweigten organischen Rest mit mindestens 2 Kohlenstoffatomen steht,
Y einen linearen oder verzweigten, aliphatischen oder cycloaliphatischen, einen araliphatischen oder aromatischen Rest mit bis zu 18 Kohlenstoffatomen bedeuten und
n für eine ganze Zahl von 1 bis 20 steht.

2. Silangruppen enthaltende Thioallophanate gemäß Anspruch 1, **dadurch gekennzeichnet, dass** in Formel (I)
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
X für einen linearen oder verzweigten Alkylenrest mit 2 bis 10 Kohlenstoffatomen steht, und
Y und n die in Anspruch 1 genannte Bedeutung haben.

3. Silangruppen enthaltende Thioallophanate gemäß Anspruch 1, **dadurch gekennzeichnet, dass** in Formel (I)
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
X für einen Propylenrest (-CH₂-CH₂-CH₂-) steht,
Y und n die in Anspruch 1 genannte Bedeutung haben.

4. Silangruppen enthaltende Thioallophanate gemäß Anspruch 1, **dadurch gekennzeichnet, dass** in Formel (I)
R¹, R² und R³ für gleiche oder verschiedene Reste stehen und jeweils Methyl, Methoxy oder Ethoxy bedeuten, mit der Maßgabe, dass mindestens einer der Reste R¹, R² und R³ für einen Methoxy- oder Ethoxyrest steht,
X für einen Propylenrest (-CH₂-CH₂-CH₂-) steht, und
Y und n die in Anspruch 1 genannte Bedeutung haben.

5. Silangruppen enthaltende Thioallophanate gemäß einem der Ansprüche 1 bis 4, **dadurch gekennzeichnet, dass** in Formel (I)
Y einen linearen oder verzweigten, aliphatischen oder cycloaliphatischen Rest mit 5 bis 13 Kohlenstoffatomen bedeutet.

6. Silangruppen enthaltende Thioallophanate gemäß einem der Ansprüche 1 bis 4, **dadurch gekennzeichnet, dass** in Formel (I)
Y einen aliphatischen und/oder cycloaliphatischen Rest bedeutet, wie er durch Entfernen der Isocyanatgruppen aus einem Diisocyanat, ausgewählt aus der Reihe 1,5-Diisocyanatopentan, 1,6-Diisocyanatohexan, 1-Isocyanato-3,3,5-trimethyl-5-isocyanatomethyl-cyclohexan, 2,4'- und/oder 4,4'-Diisocyanatodicyclohexylmethan erhalten wird.

7. Verfahren zur Herstellung Silangruppen enthaltende Thioallophanate gemäß Anspruch 1, durch Umsetzung
A) mindestens eines monomeren Diisocyanates der allgemeinen Formel (II)
**OCN-Y-NCO** (II),
in welcher Y einen linearen oder verzweigten, aliphatischen oder cycloaliphatischen, einen araliphatischen oder aromatischen Rest mit bis zu 18 Kohlenstoffatomen bedeutet, mit
B) Mercaptosilanen der allgemeinen Formel (III) 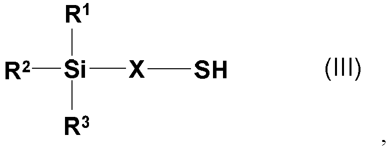 in welcher
R¹, R², R³ und X die in Anspruch 1 genannte Bedeutung haben
in einem Äquivalentverhältnis von Isocyanatgruppen zu Mercaptogruppen von 2 : 1 bis 40 : 1, wobei die Umsetzung bei einem Thioallophanatisierungsgrad des Reaktionsgemisches von mindestens 70 % abgebrochen wird, bevorzugt von mindestens 90 %, ganz besonders bevorzugt nach vollständiger Thioallophanatisierung, wobei der Thioallophanatisierungsgrad definiert ist als der aus dem NCO-Gehalt errechenbare prozentuale Anteil der zu Thioallophanatgruppen umgesetzten, aus den Mercaptogruppen der Komponente B) sich intermediär bildenden Thiourethangruppen.

8. Verfahren gemäß Anspruch 7, **dadurch gekennzeichnet, dass** als Komponente A) Diisocyanate der allgemeinen Formel (II) zum Einsatz kommen, in welcher Y einen linearen oder verzweigten, aliphatischen oder cycloaliphatischen Rest mit 5 bis 13 Kohlenstoffatomen bedeutet.

9. Verfahren gemäß Anspruch 7, **dadurch gekennzeichnet, dass** als Komponente A) 1,5-Diisocyanatopentan, 1,6-Diisocyanatohexan, 1-Isocyanato-3,3,5 -trimethyl-5 -isocyanatomethylcyclohexan, 2,4'- und/oder 4,4'-Diisocyanatodicyclohexylmethan oder beliebige Gemische dieser Diisocyanate zum Einsatz kommen.

10. Verfahren gemäß einem der Ansprüche 7 bis 9, **dadurch gekennzeichnet, dass** als Komponente B) Mercaptosilane der allgemeinen Formel (III) 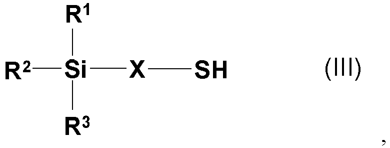 in welcher
R¹, R² und R³ für gleiche oder verschiedene Reste stehen und jeweils einen gesättigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann, und
X für einen linearen oder verzweigten Alkylenrest mit 2 bis 10 Kohlenstoffatomen steht,
oder beliebige Gemische solcher Mercaptosilane zum Einsatz kommen.

11. Verfahren gemäß einem der Ansprüche 7 bis 9, **dadurch gekennzeichnet, dass** als Komponente B) Mercaptosilane der allgemeinen Formel (III) 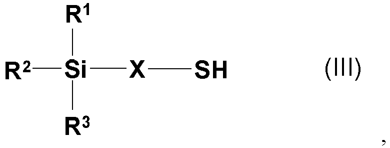 in welcher
R¹, R² und R³ jeweils Alkylreste mit bis zu 6 Kohlenstoffatomen und/oder Alkoxyreste, die bis zu 3 Sauerstoffatomen enthalten, bedeuten, mit der Maßgabe, dass mindestens einer der Reste R¹, R² und R³ für einen solchen Alkoxyrest steht, und
X für einen Propylenrest (-CH₂-CH₂-CH₂-) steht,
oder beliebige Gemische solcher Mercaptosilane zum Einsatz kommen.

12. Verfahren gemäß einem der Ansprüche 7 bis 9, **dadurch gekennzeichnet, dass** als Komponente B) Mercaptosilane der allgemeinen Formel (III) 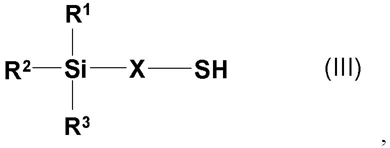 in welcher
R¹, R² und R³ für gleiche oder verschiedene Reste stehen und jeweils Methyl, Methoxy oder Ethoxy bedeuten, mit der Maßgabe, dass mindestens einer der Reste R1, R2 und R3 für einen Methoxy- oder Ethoxyrest steht, und
X für einen Propylenrest (-CH₂-CH₂-CH₂-) steht,
oder beliebige Gemische solcher Mercaptosilane zum Einsatz kommen.

13. Verfahren gemäß einem der Ansprüche 7 bis 12, **dadurch gekennzeichnet, dass** man die Umsetzung in Gegenwart eines die Bildung von Thioallophanatgruppen beschleunigenden Katalysators, bevorzugt in Gegenwart von Zink- und/oder Zirconiumcarboxylaten, durchführt.

14. Verwendung der Silangruppen enthaltenden Thioallophanate gemäß einem der Ansprüche 1 bis 6 als Ausgangskomponenten bei der Herstellung von Polyurethankunststoffen.

15. Beschichtungsmittel enthaltend Silangruppen enthaltende Thioallophanate gemäß einem der Ansprüche 1 bis 6.

16. Mit Beschichtungsmitteln gemäß Anspruch 15 beschichtete Substrate.

## Claims

1. Thioallophanates containing silane groups, of the general formula (I) 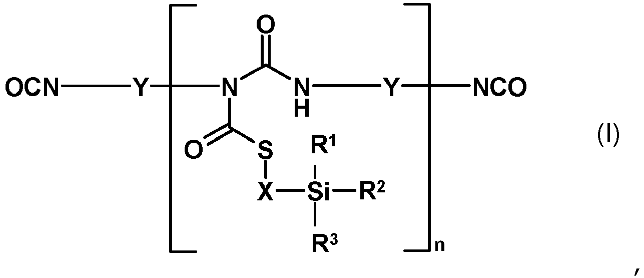 in which
R¹, R² and R³ are identical or different radicals and are each a saturated or unsaturated, linear or branched, aliphatic or cycloaliphatic or an optionally substituted aromatic or araliphatic radical having up to 18 carbon atoms, and may optionally contain up to 3 heteroatoms from the series of oxygen, sulfur and nitrogen,
X is a linear or branched organic radical having at least 2 carbon atoms,
Y is a linear or branched, aliphatic or cycloaliphatic, an araliphatic or aromatic radical having up to 18 carbon atoms, and
n is an integer from 1 to 20.

2. Thioallophanates containing silane groups according to Claim 1, **characterized in that** in formula (I)
R¹, R² and R³ are identical or different radicals and are each a saturated, linear or branched, aliphatic or cycloaliphatic radical having up to 6 carbon atoms, and may optionally contain up to 3 oxygen atoms, and
X is a linear or branched alkylene radical having 2 to 10 carbon atoms, and
Y and n have the definition stated in Claim 1.

3. Thioallophanates containing silane groups according to Claim 1, **characterized in that** in formula (I)
R¹, R² and R³ are each alkyl radicals having up to 6 carbon atoms and/or alkoxy radicals which contain up to 3 oxygen atoms, with the proviso that at least one of the radicals R¹, R² and R³ is an alkoxy radical of this kind, and
X is a propylene radical (-CH₂-CH₂-CH₂-),
Y and n have the definition stated in Claim 1.

4. Thioallophanates containing silane groups according to Claim 1, **characterized in that** in formula (I)
R¹, R² and R³ are identical or different radicals and are each methyl, methoxy or ethoxy, with the proviso that at least one of the radicals R¹, R² and R³ is a methoxy or ethoxy radical,
X is a propylene radical (-CH₂-CH₂-CH₂-), and
Y and n have the definition stated in Claim 1.

5. Thioallophanates containing silane groups according to any of Claims 1 to 4, **characterized in that** in formula (I)
Y is a linear or branched, aliphatic or cycloaliphatic radical having 5 to 13 carbon atoms.

6. Thioallophanates containing silane groups according to any of Claims 1 to 4, **characterized in that** in formula (I)
Y is an aliphatic and/or cycloaliphatic radical as obtained by removing the isocyanate groups from a diisocyanate selected from the series of 1,5-diisocyanatopentane, 1,6-diisocyanatohexane, 1-isocyanato-3,3,5-trimethyl-5-isocyanatomethylcyclohexane, 2,4'- and/or 4,4'-diisocyanatodicyclohexylmethane.

7. Process for preparing thioallophanates containing silane groups according to Claim 1, by reacting
A) at least one monomeric diisocyanate of the general formula (II)
**OCN-Y-NCO** (II),
in which Y is a linear or branched, aliphatic or cycloaliphatic, an araliphatic or aromatic radical having up to 18 carbon atoms, with
B) mercaptosilanes of the general formula (III) 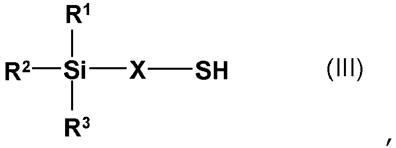 in which
R¹, R², R³ and X have the definition stated in Claim 1
in an equivalent ratio of isocyanate groups to mercapto groups of 2:1 to 40:1, where the reaction is discontinued at a degree of thioallophanatization of the reaction mixture of at least 70%, preferably of at least 90%, very preferably after complete thioallophanatization, the degree of thioallophanatization being defined as the percentage fraction, calculable from the NCO content, of the thiourethane groups, formed as intermediates from the mercapto groups of component B), that have undergone reaction to form thioallophanate groups.

8. Process according to Claim 7, **characterized in that** diisocyanates of the general formula (II) in which Y is a linear or branched, aliphatic or cycloaliphatic radical having 5 to 13 carbon atoms are employed as component A) .

9. Process according to Claim 7, **characterized in that** 1,5-diisocyanatopentane, 1,6-diisocyanatohexane, 1-isocyanato-3,3,5-trimethyl-5-isocyanatomethylcyclohexane, 2,4'- and/or 4,4'-diisocyanatodicyclohexylmethane or any desired mixtures of these diisocyanates are employed as component A).

10. Process according to any of Claims 7 to 9, **characterized in that** mercaptosilanes of the general formula (III) are employed as component B) 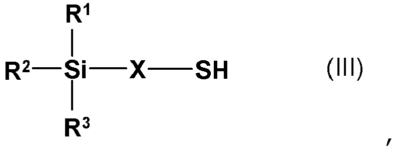 in which
R¹, R² and R³ are identical or different radicals and are each a saturated, linear or branched, aliphatic or cycloaliphatic radical having up to 6 carbon atoms, and may optionally contain up to 3 oxygen atoms, and
X is a linear or branched alkylene radical having 2 to 10 carbon atoms,
or any desired mixtures of such mercaptosilanes.

11. Process according to any of Claims 7 to 9, **characterized in that** mercaptosilanes of the general formula (III) are employed as component B) 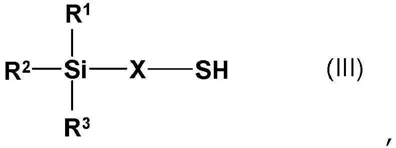 in which
R¹, R² and R³ are each alkyl radicals having up to 6 carbon atoms and/or alkoxy radicals which contain up to 3 oxygen atoms, with the proviso that at least one of the radicals R¹, R² and R³ is an alkoxy radical of this kind, and
X is a propylene radical (-CH₂-CH₂-CH₂-),
or any desired mixtures of such mercaptosilanes.

12. Process according to any of Claims 7 to 9, **characterized in that** mercaptosilanes of the general formula (III) are employed as component B) 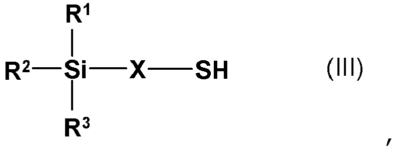 in which
R¹, R² and R³ are identical or different radicals and are each methyl, methoxy or ethoxy, with the proviso that at least one of the radicals R1, R2 and R3 is a methoxy or ethoxy radical, and
X is a propylene radical (-CH₂-CH₂-CH₂-),
or any desired mixtures of such mercaptosilanes.

13. Process according to any of Claims 7 to 12, **characterized in that** the reaction is carried out in the presence of a catalyst which accelerates the formation of thioallophanate groups, preferably in the presence of zinc carboxylates and/or zirconium carboxylates.

14. Use of the thioallophanates containing silane groups according to any of Claims 1 to 6 as starting components in the production of polyurethane plastics.

15. Coating compositions comprising thioallophanates containing silane groups according to any of Claims 1 to 6.

16. Substrates coated with coating compositions according to Claim 15.

## Revendications

1. Thioallophanates contenant des groupes silane de formule générale (I) 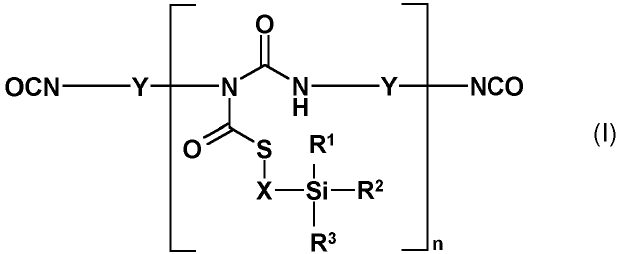 dans laquelle
R¹, R² et R³ représentent des radicaux identiques ou différents et signifient respectivement un radical aliphatique linéaire ou ramifié ou cycloaliphatique, saturé ou insaturé, ou un radical aromatique ou araliphatique le cas échéant substitué, comprenant jusqu'à 18 atomes de carbone, qui peut le cas échéant contenir jusqu'à 3 hétéroatomes de la série oxygène, soufre, azote,
X représente un radical organique linéaire ou ramifié comprenant au moins 2 atomes de carbone,
Y signifie un radical aliphatique linéaire ou ramifié ou cycloaliphatique, un radical araliphatique ou aromatique comprenant jusqu'à 18 atomes de carbone et
n représente un nombre entier de 1 à 20.

2. Thioallophanates contenant des groupes silane selon la revendication 1, **caractérisés en ce que**, dans la formule (I),
R¹, R² et R³ représentent des radicaux identiques ou différents et signifient respectivement un radical aliphatique linéaire ou ramifié ou cycloaliphatique, saturé comprenant jusqu'à 6 atomes de carbone, qui peut le cas échéant contenir jusqu'à 3 atomes d'oxygène et
X représente un radical alkylène linéaire ou ramifié comprenant 2 à 10 atomes de carbone et
Y et n ont la signification mentionnée dans la revendication 1.

3. Thioallophanates contenant des groupes silane selon la revendication 1, **caractérisés en ce que**, dans la formule (I),
R¹, R² et R³ signifient respectivement des radicaux alkyle comprenant jusqu'à 6 atomes de carbone et/ou des radicaux alcoxy, qui contiennent jusqu'à 3 atomes d'oxygène, sous réserve qu'au moins l'un des radicaux R¹, R² et R³ représente un tel radical alcoxy et
X représente un radical propylène (-CH₂-CH₂-CH₂-),
Y et n ont la signification mentionnée dans la revendication 1.

4. Thioallophanates contenant des groupes silane selon la revendication 1, **caractérisés en ce que**, dans la formule (I),
R¹, R² et R³ représentent des radicaux identiques ou différents et signifient respectivement méthyle, méthoxy ou éthoxy, sous réserve qu'au moins l'un des radicaux R¹, R² et R³ représente un radical méthoxy ou éthoxy,
X représente un radical propylène (-CH₂-CH₂-CH₂-) et
Y et n ont la signification mentionnée dans la revendication 1.

5. Thioallophanates contenant des groupes silane selon l'une quelconque des revendications 1 à 4, **caractérisés en ce que**, dans la formule (I),
Y signifie un radical aliphatique linéaire ou ramifié ou cycloaliphatique comprenant 5 à 13 atomes de carbone.

6. Thioallophanates contenant des groupes silane selon l'une quelconque des revendications 1 à 4, **caractérisés en ce que**, dans la formule (I),
Y signifie un radical aliphatique et/ou cycloaliphatique, tel qu'il est obtenu par élimination des groupes isocyanate d'un diisocyanate, choisi dans la série 1,5-diisocyanatopentane, 1,6-diisocyanatohexane, 1-isocyanato-3,3,5-triméthyl-5-isocyanatométhylcyclohexane, 2,4'-diisocyanatodicyclohexylméthane et/ou 4,4'-diisocyanatodicyclohexylméthane.

7. Procédé pour la préparation de thioallophanates contenant des groupes silane selon la revendication 1, par transformation
A) d'au moins un diisocyanate monomère de formule générale (II)
**OCN-Y-NCO** (II)
dans laquelle Y signifie un radical aliphatique linéaire ou ramifié ou cycloaliphatique, un radical araliphatique ou aromatique comprenant jusqu'à 18 atomes de carbone, avec
B) des mercaptosilanes de formule générale (III) 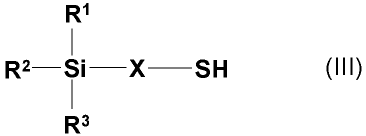 dans laquelle
R¹, R², R³ et X ont la signification mentionnée dans la revendication 1,
dans un rapport d'équivalence de groupes isocyanate aux groupes mercapto de 2:1 à 40:1, la transformation étant interrompue à un degré de thioallophanatisation du mélange réactionnel d'au moins 70%, de préférence d'au moins 90%, de manière tout particulièrement préférée après la thioallophanatisation complète, le degré de thioallophanatisation étant défini comme la proportion, en pour cent, pouvant être calculée à partir de la teneur en NCO des groupes thio-uréthane transformés en groupes thioallophanate, se formant de manière intermédiaire à partir des groupes mercapto du composant B).

8. Procédé selon la revendication 7, **caractérisé en ce qu'**on utilise, comme composant A), des diisocyanates de formule générale (II), dans laquelle Y signifie un radical aliphatique linéaire ou ramifié ou cycloaliphatique comprenant 5 à 13 atomes de carbone.

9. Procédé selon la revendication 7, **caractérisé en ce qu'**on utilise, comme composant A), du 1,5-diisocyanatopentane, du 1,6-diisocyanatohexane, du 1-isocyanato-3,3,5-triméthyl-5-isocyanatométhylcyclohexane, du 2,4'-diisocyanatodicyclohexylméthane et/ou du 4,4'-diisocyanatodicyclohexylméthane ou des mélanges quelconques de ces diisocyanates.

10. Procédé selon l'une quelconque des revendications 7 à 9, **caractérisé en ce qu'**on utilise, comme composant B), des mercaptosilanes de formule générale (III) 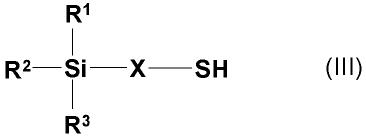 dans laquelle
R¹, R² et R³ représentent des radicaux identiques ou différents et signifient respectivement un radical aliphatique linéaire ou ramifié ou cycloaliphatique, saturé comprenant jusqu'à 6 atomes de carbone, qui peut le cas échéant contenir jusqu'à 3 atomes d'oxygène et
X représente un radical alkylène linéaire ou ramifié comprenant 2 à 10 atomes de carbone,
ou des mélanges quelconques de ces mercaptosilanes.

11. Procédé selon l'une quelconque des revendications 7 à 9, **caractérisé en ce qu'**on utilise, comme composant B), des mercaptosilanes de formule générale (III) 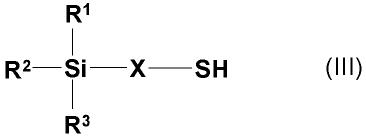 dans laquelle
R¹, R² et R³ signifient respectivement des radicaux alkyle comprenant jusqu'à 6 atomes de carbone et/ou des radicaux alcoxy, qui contiennent jusqu'à 3 atomes d'oxygène, sous réserve qu'au moins l'un des radicaux R¹, R² et R³ représente un tel radical alcoxy et
X représente un radical propylène (-CH₂-CH₂-CH₂-),
ou des mélanges quelconques de ces mercaptosilanes.

12. Procédé selon l'une quelconque des revendications 7 à 9, **caractérisé en ce qu'**on utilise, comme composant B), des mercaptosilanes de formule générale (III) 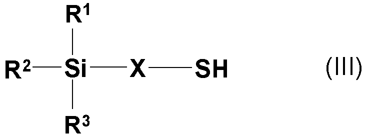 dans laquelle
R¹, R² et R³ représentent des radicaux identiques ou différents et signifient respectivement méthyle, méthoxy ou éthoxy, sous réserve qu'au moins l'un des radicaux R¹, R² et R³ représente un radical méthoxy ou éthoxy et
X représente un radical propylène (-CH₂-CH₂-CH₂-),
ou des mélanges quelconques de ces mercaptosilanes.

13. Procédé selon l'une quelconque des revendications 7 à 12, **caractérisé en ce qu'**on réalise la transformation en présence d'un catalyseur accélérant la formation de groupes thioallophanate, de préférence en présence de carboxylates de zinc et/ou de zirconium.

14. Utilisation des thioallophanates contenant des groupes silane selon l'une quelconque des revendications 1 à 6 comme composants de départ lors de la préparation de matériaux synthétiques à base de polyuréthane.

15. Agent de revêtement contenant des thioallophanates contenant des groupes silane selon l'une quelconque des revendications 1 à 6.

16. Substrats revêtus par des agents de revêtement selon la revendication 15.
